# EUROPÄISCHE PATENTSCHRIFT

(11) **EP 4 029 668 B1**
(45) Veröffentlichungstag und Bekanntmachung des Hinweises auf die Patenterteilung: **04.03.2026**
(21) Anmeldenummer: 21152395.6
(22) Anmeldetag: 19.01.2021
(51) Int. Cl.: B27N 7/00, B29C 37/00, B29C 59/02, B29C 70/64, B29C 73/02, B29C 73/34, B32B 43/00, B29C 64/106, B27N 3/18, G01N 21/88

(54) **VERFAHREN ZUM VERFÜLLEN VON UNEBENHEITEN IN EINER FURNIER- ODER HOLZWERKSTOFFPLATTE**
METHOD FOR FILLING UNEVEN SECTIONS IN A VENEER OR DERIVED TIMBER BOARD
PROCÉDÉ DE REMPLISSAGE DES IRRÉGULARITÉS DANS UNE PLAQUE EN MATÉRIAU DÉRIVÉ DU BOIS OU DE PLACAGE

(43) Veröffentlichungstag der Anmeldung: 20.07.2022
(73) Patentinhaber: Flooring Technologies Ltd., Kalkara SCM 1001 (MT)
(72) Erfinder: Braun, Roger, 6130 Willisau (CH); Kalwa, Norbert, 32805 Horn-Bad Meinberg (DE); HASCH, Joachim, 10317 Berlin (DE)
(74) Vertreter: Kalkoff & Partner Patentanwälte mbB

(56) Entgegenhaltungen:
- EP-A1- 3 216 574
- DE-A1- 102010 049 638
- US-A- 4 614 555

## Beschreibung

Die Erfindung betrifft eine Furnier- oder Holzwerkstoffplatte, deren Oberfläche Unebenheiten aufweist.

Furnier- oder Holzwerkstoffplatten weisen eine Oberfläche mit Unebenheiten auf. Bei Furnieren sind Unebenheiten durch Risse, Astlöcher, lockere Äste oder Löcher gegeben. Bei Holzwerkstoffplatten kommen Unebenheiten in Form von Fugen oder Spalten zwischen Holzpartikeln, Unebenheiten durch Störungen beim Streuen der Fasern oder Späne oder, insbesondere bei Spanplatten mit großen Spänen in der Außenlage wie z. B. OSB (Oriented Strand Board). Bisher werden diese Unebenheiten durch Spachteln mit Spachtelmasse verfüllt und anschließend geschliffen, so wie in der DE 10 2020 049 638 A1, der DE 10 2009 007 114 A1 oder der EP 3 216 574 A1 beschrieben. Das Spachteln erfolgt überwiegend von Hand, obwohl auch Versuche zur Automatisierung bekannt sind. Das Spachteln von Hand und das anschließende Schleifen sind aufwändig und kostenintensiv. Die US 4 614 555 A offenbart ein Verfahren zur Herstellung von Sperrholzplatten, im Zuge derer die Sperrholzplatten auf Defekte überprüft werden, gefolgt von einem Ausschneiden der Defekte sowie ein Auffüllen der Ausschnitte.

Es ist Aufgabe der Erfindung, das Verfüllen von Unebenheiten in der Oberfläche einer Furnier- oder Holzwerkstoffoberfläche zu vereinfachen und wirtschaftlicher zu gestalten.

Die Lösung dieser Aufgabe erfolgt mit einem Verfahren nach Anspruch 1 und mit einer Furnier- oder Holzwerkstoffplatte nach Anspruch 12.

Das erfindungsgemäße Verfahren zum Verfüllen einer Unebenheit in der Oberfläche einer Furnier- oder Holzwerkstoffplatte sieht die folgenden Schritte vor:
- Erfassen der Unebenheit in der Oberfläche der Furnier- oder Holzwerkstoffplatte, und
- Eintragen von Material in die Unebenheit, die hinter die Oberfläche zurücktritt, wobei das Eintragen von Material mittels eines 3D-Druckers derart erfolgt, dass eine ebene Oberfläche der furnier- oder Holzwerkstoffplatte geschaffen wird.

Die Erfindung bezieht sich auf Furnier- oder Holzwerkstoffplatten. Eine Furnierplatte weist eine Trägerplatte und ein auf einer Oberfläche der Trägerplatte aufgebrachtes Furnier auf. Das Furnier ist meist ein Holzfurnier. Eine Holzwerkstoffplatte ist eine Massivholzplatte, eine Sperrholzplatte, eine Span- oder eine Faserplatte.

Das Erfassen von Unebenheiten der Oberfläche einer Furnier- oder Holzwerkstoffplatte (im Folgenden auch gemeinsam als Platte bezeichnet) erfolgt in der Regel durch einen Scanner, der die Oberfläche einer Furnier- oder Holzwerkstoffplatte mit deren Unebenheiten erfasst. Unebenheiten sind Bereiche, die insbesondere in der Tiefe von der Ebene der Oberfläche der Furnier- oder Holzwerkstoffplatte abweichen, die also hinter die Oberfläche der Platte zurücktreten. Dabei werden durch das Scannen jeweils Länge, Breite und Tiefe einer Unebenheit erfasst, wobei Länge und Breite in der Ebene der Oberfläche der Furnier- oder Holzwerkstoffplatte liegen. Das Scannen kann mit beliebigen Verfahren erfolgen; als besonders geeignet hat sich der Einsatz eines Streifenbildscanners erwiesen, der eine Platte abschnittsweise scannt und die erfassten Signale zu den Unebenheiten an eine Steuereinheit übermittelt, die diese Signale als Datensatz bezogen auf die gescannte Platte speichert. Damit sind die Unebenheiten einer Platte erfasst. Der Datensatz wird vorzugsweise für eine spezifische Platte erstellt. Nach einer Weiterbildung der Erfindung wird die Platte markiert, so dass Detektoren an späteren Be- und Verarbeitungsvorrichtungen die Platte erkennen und auf den Datensatz der Steuereinheit zurückgreifen können, also z. B. die Unebenheiten auch nach dem Verfüllen noch erkennen, sei es in Verbindung mit dem Aufbringen einer Beschichtung, eines Dekors oder einer Struktur oder in Verbindung mit dem Aufteilen der Platte in kleinere Einheiten, z. B. in Paneele. Die Steuereinheit kann mit Grenzwerten für die Verfüllung von Unebenheiten ausgestattet sein, die eine minimale Tiefe, eine minimale Länge und /oder eine minimale Breite festlegen, die gegeben sein müssen, damit die Unebenheit verfüllt wird. Bevorzugt sind die Grenzwerte frei wählbar.

Optional kann der Datensatz auch dazu verwendet werden, ein Vorbereitungswerkzeug zu steuern, dass die Unebenheit für das Verfüllen vorbereitet, z. B. eine Fräse, die lose Fasern vom Rand der Unebenheit entfernt oder einen Bohrer, der Hinterschneidungen beseitigt, so dass keine Hohlräume ohne Füllmaterial entstehen oder der kleine Unebenheiten so weit vergrößert, dass der Matrixdrucker diese korrekt verfüllen kann.

Das Einbringen von Material in die Unebenheit, die hinter die Oberfläche der Platte zurücktritt, erfolgt erfindungsgemäß durch den Einsatz eines Matrixdruckers in Form eines 3-D-Druckers. Der Matrixdrucker wird durch die Steuereinheit gesteuert. Die Steuerung erfolgt so, dass der Matrixdrucker Material in die Unebenheit einbringt bis ein vorgegebenes Niveau des Materials erreicht ist, das meist in etwa mit der Oberfläche der Platte fluchtet. Der Matrixdrucker ist in der Lage, das Material exakt in die Unebenheit einzubringen und diese auszufüllen. Der Matrixdrucker ist insbesondere in der Lage, das Material so exakt in die Unebenheit einzubringen, dass eine ebene Oberfläche geschaffen wird, die nicht mehr geschliffen werden muss. Damit entfällt der Aufwand für händische Arbeit und für die nachträgliche Bearbeitung der Unebenheit. Gleichzeitig wird es durch die einfache und wirtschaftliche Beseitigung von Unebenheiten nun interessant, durch das Verfüllen von Unebenheiten auch weniger wertvolle Platten, insbesondere Holzwerkstoffplatten mit hochwertigeren, glatten Oberflächen herzustellen und dadurch eine höhere Wertschöpfung zu erzielen.

Nach einer vorteilhaften Ausführung des Verfahrens erfolgt das Eintragen von Material schichtweise mit einer ersten und mindestens einer zweiten Schicht. Auf diese Weise kann die Unebenheit präzise und vollständig verfüllt werden. Die Dicke einer Schicht des Materials in der Unebenheit kann 0,01 mm bis 1 mm betragen, vorteilhaft 0,05 bis 0,5 mm, insbesondere 0,1 bis 0,25 mm. Besonders vorteilhaft arbeitet der Matrixdrucker nach dem Verfahren der Stereolithografie, bei dem aufgetragenes Material unmittelbar nach dem Auftragen mindestens abschnittsweise, bevorzugt vollständig ausgehärtet wird. Dadurch können unmittelbar anschließend und ohne Zeitverzug ggf. ein Dekor, eine Struktur und/oder eine Versiegelung auf das in der Unebenheit verfüllte Material aufgebracht werden. Das erfindungsgemäße Verfahren, dass das Einbringen von Spachtelmasse vermeidet bzw. ausschließt, vermeidet Handarbeit und eröffnet so einen Weg zum schnellen, maschinellen Verfüllen einer Unebenheit. Zusätzlich kann wegen des gleichmäßigen Einbringens gerade beim schichtweisen Einbringen von Füllstoff, auf das Schleifen der in die Unebenheit eingebrachten Füllung verzichtet werden.

Weitere vorteilhafte Aspekte des Verfüllens werden nachfolgend beschrieben.

Das Eintragen von Material in eine Schicht kann nach einer bevorzugten Ausführung der Erfindung auch abschnittsweise erfolgen. Dies kann insbesondere genutzt werden, wenn im Bereich der Oberfläche der verfüllten Unebenheit, insbesondere im sichtbaren Bereich der Oberfläche der verfüllten Unebenheit, abschnittsweise farbiges Material aufgebracht wird, das sich von der Farbe des darunter befindlichen Materials unterscheidet, um ein Dekor zu erzeugen, dass dem Dekor der umgebenden Plattenoberfläche entspricht oder um eine Struktur zu erzeugen, die sich über die Oberfläche der verfüllten Unebenheit erhebt, um der Struktur der umgebenden Plattenoberfläche zu entsprechen.

Entsprechend sieht eine weitere Ausführungsform der Erfindung vor, dass ein erstes und mindestens ein zweites Material, das sich von dem ersten Material unterscheidet, in die Unebenheit eingetragen wird, die hinter die Oberfläche der Furnier- oder Holzwerkstoffplatte zurücktritt. Der Einsatz von zwei oder mehr Materialien ermöglicht es eine qualitativ bessere und ästhetisch ansprechendere Füllung der Unebenheit herzustellen. Der Begriff des Materials im Zusammenhang dieser Erfindung wird so verstanden, dass er alle Materialien umfasst, die in die Unebenheit oder auf die Füllung, die in die Unebenheit ein- bzw. aufgebracht werden. Beispielsweise wird nach einer bevorzugten Ausführungsform als erstes Material ein Primer in die Unebenheit eingebracht, um eine optimale An- bzw. Einbindung eines zweiten Materials, z. B. eines Füllmaterials, an bzw. in die Unebenheit zu gewährleisten. Typische Primer sind beispielsweise Verbindungen auf Basis von Isocyanaten. Vorteilhafte Ausführungen der Erfindung sehen vor, dass auch verschiedene Füllmaterialen eingesetzt werden, z. B. ungefärbtes Füllmaterial im Inneren der Füllung in der Unebenheit, gefärbtes Füllmaterial auf der Oberfläche der Füllung in der Unebenheit weiter alternativ kann eine Deckschicht durch den Matrixdrucker aufgebracht werden, die farblich in besonderer Weise an die umgebende Plattenoberfläche angepasst ist oder die besondere Gebrauchseigenschaften aufweist, z. B. eine besondere Abriebfestigkeit. Weitere Materialien, die in die Unebenheit eingebracht werden, sind nachfolgend näher erläutert.

Eine weiter bevorzugte Ausführung der Erfindung sieht vor, dass zwei oder mehr Matrixdrucker zum Einbringen von Material in eine Unebenheit eingesetzt werden. In einer einfachen Ausführung des erfindungsgemäßen Verfahrens kann ein einzelner Matrixdrucker verschiedene Materialien nacheinander verarbeiten. Insbesondere dann, wenn zwei oder mehr verschiedene Materialen zum Verfüllen einer Unebenheit in einer Furnier- oder Holzwerkstoffplatte zu verarbeiten sind, erweist es sich jedoch als vorteilhaft, zwei Matrixdrucker, alternativ einen Matrixdrucker für jedes Material einzusetzen. Die zwei oder mehr Matrixdrucker können beispielsweise nacheinander angeordnet sein. Da die Steuereinheit es ermöglicht, jede Unebenheit auf jeder Platte eindeutig zu identifizieren, ist es unproblematisch, das Verfüllen einer Unebenheit in einzelne Teilschritte zu zerlegen und zwei oder mehr Matrixdrucker einzusetzen, um nacheinander eine Unebenheit auszufüllen. Nach einer bevorzugten Ausführung der Erfindung erfasst die Steuereinheit für jede Unebenheit, wie weit ein Matrixdrucker jeweils diese Unebenheit verfüllt hat, so dass für einen folgenden Matrixdrucker bestimmt werden kann, wo dieser folgende Matrixdrucker mit dem Verfüllen der bereits teilweise verfüllten Unebenheit fortsetzt.

Wie bereits erläutert, kann ein Matrixdrucker verschiedene Materialien in die Unebenheit eintragen. Diese verschiedenen Materialien können nach einer bevorzugten Ausführung der Erfindung beispielsweise jeweils mindestens eine Beize, einen Primer, ein Füllmaterial, eine Grundierung, ein Dekormaterial, ein Versiegelungsmaterial, ein strukturbildendes Material, ein Öl und/oder einen Lack umfassen, die jeweils einzeln oder in Kombination miteinander in einer ersten und mindestens einer zweiten Schicht in die Unebenheit eingetragen werden. Wie vorstehend beschrieben wird der Primer eingesetzt, um die Bindung z. B. des Füllmaterials an das Furnier oder den Holzwerkstoff der jeweiligen Platte zu verbessern. Ein Primer kann aber auch eingesetzt werden, um die vorstehend genannten unterschiedlichen Schichten bzw. Materialien aneinander zu binden. Das Füllmaterial ist dazu vorgesehen, das Volumen der Unebenheit zu füllen. Typische Füllmaterialien werden nachfolgend genannt. Eine Grundierung wird in der Regel auf das Füllmaterial aufgetragen. Die Grundierung ist in der Regel eingefärbt zur Anpassung an die die Unebenheit umgebende Oberfläche der Furnier- oder Holzwerkstoffplatte. Sie kann, abgesehen von der Farbe bzw. Pigmentierung aus demselben Material bestehen wie das Füllmaterial. Das Dekormaterial wird meist nur als abschnittsweise aufgetragene Schicht eingesetzt und es weist eine andere Farbe als die Grundierung oder das Füllmaterial auf. Es wird eingesetzt, um ein Dekor aufzubringen, mit dem die Unebenheit an die umgebende Oberfläche der Furnier- oder Holzwerkstoffplatte angeglichen wird, so dass die Unebenheit sich nicht mehr von der umgebenden Oberfläche unterscheidet. Um das Dekormaterial, die Grundierung bzw. das Füllmaterial gegen Verschleiß zu schützen, kann ein Versiegelungsmaterial aufgetragen werden, z. B. ein Lack oder ein Kunstharz. Das Versiegelungsmaterial ist nicht opak. Es ist transparent, entweder vollständig transparent oder eingefärbt, aber immer noch so transparent, dass ein darunter aufgetragenes Füllmaterial, eine Grundierung oder ein Dekormaterial sichtbar bleiben. Die Versiegelung kann Additive enthalten, insbesondere Hartstoff-Partikel gegen Abrieb oder zur Steigerung der Kratzfestigkeit. Des Weiteren kann ein strukturbildendes Material, z. B. ein Lack, insbesondere ein UV- oder strahlungshärtender Lack aufgetragen werden, entweder als abschnittsweise aufgetragene Schicht um durch erhaben aufgetragene Strukturen die Oberfläche der Unebenheit an die umgebende Oberfläche anzupassen oder als Schicht, in die durch nachfolgendes Prägen Strukturen eingebracht werden, ebenfalls zur Anpassung an die umgebende Oberfläche. Nach einer alternativen Ausführung der Erfindung kann ein Lack auf das Füllmaterial, die Grundierung, das Dekormaterial, die Versiegelung und / oder das strukturbildende Material aufgetragen werden, z. B. um den Glanzgrad der Oberfläche der Unebenheit an die umgebende Oberfläche der Platte anzugleichen oder um gezielte Unterschiede hierzu herzustellen. Auch hier werden bevorzugt UV- oder strahlungshärtende Lacke eingesetzt. Als Alternative zum Lack kann auch ein Öl zum Bearbeiten der Oberfläche der verfüllten Unebenheit eingesetzt werden, bevorzugt ein lufthärtendes oder strahlungshärtendes Öl. Soweit für die eingesetzten Materialien ausgeführt wird, dass diese in die Unebenheit eingebracht werden, bezieht sich dieser Ausdruck auf jedes Auf- oder Einbringen von Material im Bereich der Unebenheit, ungeachtet dessen, ob die Unebenheit vollständig, das heißt bis zur nach außen gewandten Oberseite des Furniers oder der Holzwerkstoffplatte verfüllt wird, oder ob die Oberseite der Füllung in der Unebenheit unterhalb dieser Oberseite bleibt oder ob sie darüber hinausragt.

Das zu verfüllende Volumen der Unebenheit wird in der Regel überwiegend durch Füllmaterial aufgefüllt. Als Füllmaterial können alle 3D-verdruckbaren Materialien eingesetzt werden. Die Anbindung des jeweils eingesetzten Materials an das Furnier bzw. den Holzwerkstoff kann ggf. durch Einsatz eines Primers optimiert werden. Als Füllmaterial können thermoplastische Materialien wie Polyamid, TPU (thermoplastisches Polyurethan), PLA (Polymilchsäure), ABS (Acrylnitril-Butadien-Styrol-Copolymer), PVAc (Polyvinylacetat), PETG (mit Glycol polymerisiertes Polyethylenterephthalat), HIPS (High-impact Polystyrene), Holzfilament usw. eingesetzt werden.

Auch kann thermoplastisches Füllmaterial verwendet werden, das nach dem Einbringen in die Unebenheit noch zu trocknen bzw. auszuhärten ist, wie z. B. Acrylat-, Epoxy- oder Vinylester-Verbindungen, insbesondere deren Monomere oder Oligomere usw. Bei Füllmaterial, das nach dem Verfüllen in der Unebenheit getrocknet oder ausgehärtet werden muss, kann das Trocknen bzw. Aushärten während oder nach dem Einfüllen erfolgen. Auch hier erweist sich das schichtweise Einbringen als vorteilhaft, weil das Füllmaterial, das in einer Schicht aufgetragen wird, schnell und vollständig getrocknet oder ausgehärtet werden kann, ohne den Produktionsprozess aufzuhalten. Das Trocknen oder Aushärten kann dabei durch Abkühlen oder durch Vernetzung mit Hilfe von UV-Strahlung oder Elektronenstrahlhärtung erfolgen.

Nach einer bevorzugten Ausführung der Erfindung können dem Füllmaterial auch Zusätze wie Farbpigmente, Metallpigmente, Fasern zur Armierung, Partikel zur Leitfähigkeitserhöhung, Haftvermittler, Nanopartikel, Glaskugeln usw. dem Füllmaterial zugemischt werden, jeweils einzeln oder in Kombination. Das Zugeben von Zusätzen zum Füllmaterial bietet sich insbesondere dann an, wenn keine Grundierung oder dergleichen eingesetzt wird, so dass das Füllmaterial entweder vollständig sichtbar bleibt oder aber noch teilweise sichtbar ist, weil z. B. noch Dekor- oder Strukturmaterial abschnittsweise auf das Füllmaterial aufgetragen werden. Zusätze zum Füllmaterial können auch genutzt werden, um bei späteren Be- oder Verarbeitungsvorgängen verfüllte Unebenheiten zu erkennen, auch unabhängig von der Steuereinheit. Sensoren könne z. B. Metallpigmente oder Partikel zur Leitfähigkeitserhöhung, aber auch zum Zwecke der Markierung der Unebenheit zugesetzte Partikel wie z. B. magnetische Partikel detektieren, die in der Umgebung der verfüllten Unebenheit nicht erkennbar sind.

Wird Material zum Verfüllen der Unebenheit eingesetzt, das sich schlecht oder gar nicht mit einem 3-D-Drucker einbringen lässt, so wird nach einer vorteilhaften Weiterentwicklung der Erfindung mindestens ein weiteres Werkzeug zum Einbringen von Material in die Unebenheit eingesetzt. Typisch ist dies z. B. ein weiterer Matrixdrucker, insbesondere ein Tintenstrahldrucker, mit dem ein Primer oder ein Lack aber auch Dekor- oder Strukturmaterial oder Öl eingebracht werden können. Alternativ kann es sich aber auch um Sprüh- oder Streuvorrichtungen handeln, die eines oder mehrere der vorstehend genannten Materialien in die Unebenheit einbringen. Weiter wird bevorzugt, wenn der Matrixdrucker mit Mitteln zum Trocknen und/oder Aushärten des jeweils aufgetragenen Materials ausgestattet ist. Diese Mittel zum Trocknen und/oder Aushärten müssen dabei nicht Bestandteil des Matrixdruckers sein, sie sind jedoch so angeordnet, dass sie eine oder mehrere der zuvor aufgetragenen Schichten von Material mindestens teilweise trocknen und/oder aushärten. Die Mittel zum Trocknen und/oder Aushärten von Material, insbesondere von einem der vorstehend genannten Materialien, können beispielsweise UV-Strahler, IR-Strahler, Warm- oder Kaltluftgebläse sein.

Im Bereich der Unebenheiten ist die umgebende Oberfläche der Furnier- oder Holzwerkstoffplatte oft verfärbt oder die Oberfläche der Platte weist in der Umgebung der Fehlstelle ein anderes Dekor bzw. eine andere Struktur auf. Besonders bevorzugt wird es, wenn die Oberseite der Füllung in der Unebenheit an die umgebende Oberfläche der Furnier- bzw. Holzwerkstoffplatte angepasst wird. Zu diesem Zweck kann nach einer Ausführung der Erfindung eine farbliche Anpassung erfolgen, indem die die Unebenheit umgebende Oberfläche der Platte gefärbt, entfärbt oder gebeizt wird. Der Einsatz von Farbe, Entfärber oder Beize kann durch an sich bekannte Mittel zum Auftragen erfolgen. Eine farbliche Anpassung weist bevorzugt einen Gradienten von der Oberseite der Unebenheit bis hin zur Oberfläche der Platte auf, dort wo die Oberfläche der Platte ihre übliche Farbe aufweist. Nach einer weiteren vorteilhaften Ausführung der Erfindung wird die die Unebenheit umgebende Oberfläche der Furnier- oder Holzwerkstoffplatte mit einem Dekor und/oder einer Struktur versehen, die einen Übergang vom Dekor bzw. der Struktur der Oberfläche der Platte zum Dekor bzw. der Struktur der Unebenheit herstellt. Auf diese Weise wird die Unebenheit nahezu unsichtbar. Das auf die die Unebenheit umgebende Oberfläche aufzubringende Dekor bzw. die aufzubringende Struktur können, insbesondere nach vorheriger Erfassung des Dekors bzw. der Struktur der Oberfläche der Platte durch Sensoren, insbesondere optische Sensoren, von der Steuereinheit berechnet werden. Gleiches gilt für das Färben, Entfärben oder Beizen der die Unebenheit umgebenden Oberfläche der Furnier- oder Holzwerkstoffplatte.

Gegenstand der Erfindung ist weiter eine Furnier- oder Holzwerkstoffplatte gemäß Anspruch 12, die eine Unebenheit aufweist, die mit einem Füllmaterial verfüllt ist, wobei das Füllmaterial schichtweise eingetragen ist. Die Dicke einer Schicht von Füllmaterial beträgt 0,01 mm bis 1 mm, vorteilhaft 0,05 bis 0,5 mm, vorteilhaft 0,1 bis 0,25 mm. Damit unterscheidet sich die erfindungsgemäße Platte von bekannten Furnierplatten, weil die Unebenheit nicht mit Spachtelmasse verfüllt wird. Die Spachtelmasse wird nicht in Schichten, jedenfalls nicht in so dünnen Schichten in die Unebenheit eingetragen.

Nach einer bevorzugten Ausführung weist die erfindungsgemäße Platte eine Unebenheit auf, in die ein erstes und mindestens ein zweites Material eingefüllt sind. Die verschiedenen Materialien, die sich zum Einbringen in die Unebenheit eignen, wurden bereits vorstehend erläutert. Es ist als besonderer Vorteil der erfindungsgemäßen Platte anzusehen, dass eine Unebenheit nicht nur einfach mit einem einheitlichen Füllmaterial verfüllt werden kann, sondern dass der Einsatz von mindestens zwei Materialien ermöglicht, in wenigen, einfachen Arbeitsgängen eine mit einem Dekor und /oder einer Struktur versehene, ggf. mit einer Versiegelung ausgestattete Oberseite der Füllung herzustellen, die optimal an die umgebende Oberfläche angepasst ist. Insbesondere das Aufbringen einer Struktur erweist sich beim Anpassen der Oberseite der Füllung in der Unebenheit als vorteilhaft. Auch hier zeigt sich als wesentlicher Vorteil der Erfindung, dass ein Schleifen des Füllmaterials oder anderer Materialien, die in die Unebenheit eingebracht sind, nicht notwendig ist. Das Wegfallen des Schleifens beschleunigt das Verfüllen der Unebenheit und ermöglicht es ohne Zeitverzug die Unebenheit nicht einfach nur zu verfüllen sondern sie auch abschließend zu bearbeiten, z. B. mit einem Dekor und/oder einer Struktur bzw. einer Versiegelung zu versehen.

Schließlich ist eine Furnier- oder Holzwerkstoffplatte Gegenstand einer Ausführung der Erfindung, bei der die die Unebenheit umgebende Oberfläche der Unebenheit wie vorstehend beschrieben farblich angepasst ist. Auch eine Furnier- oder Holzwerkstoffplatte, bei der das Dekor bzw. die Struktur der die Unebenheit umgebenden Oberfläche an die Struktur der Oberfläche der Platte wie vorstehend beschrieben angepasst ist, ist Gegenstand einer vorteilhaften Ausführung der Erfindung.

Es wird ausdrücklich angemerkt, dass die vorstehend beschriebenen Ausführungen der Erfindung je nach Anwendungsfall miteinander kombiniert werden können.

Details der Erfindung werden an Hand von Ausführungsbeispielen erläutert. Es zeigen:
- Fig. 1: eine perspektivische Ansicht einer verfüllten Unebenheit in einer Furnierplatte in schematischer Darstellung;
- Fig. 2: eine schematische Darstellung einer möglichen Schichtfolge einer verfüllten Unebenheit.

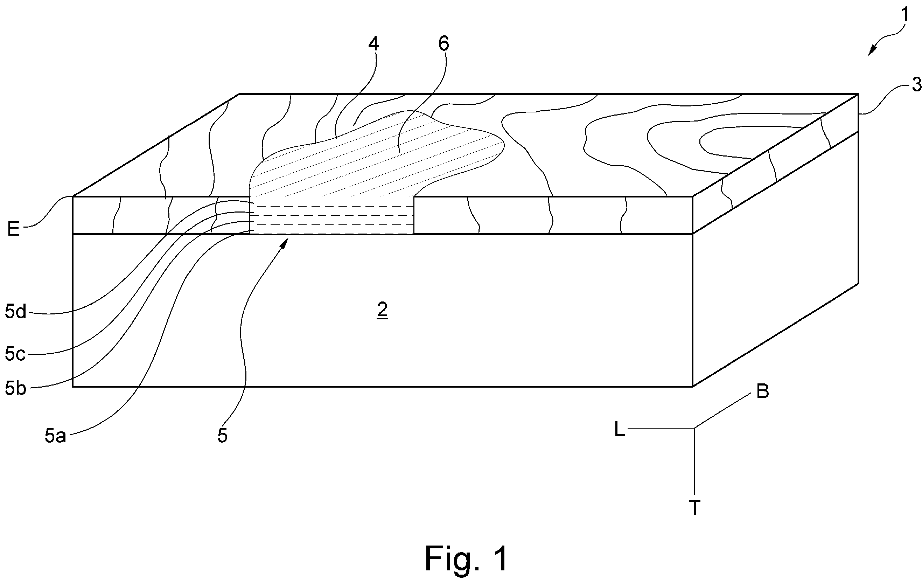

Fig. 1 zeigt eine Furnierplatte 1 mit einer Trägerplatte 2 und einem auf der Trägerplatte angeordnetem Furnier 3. Die nachfolgenden Erläuterungen gelten in gleicher Weise auch für Holzwerkstoffplatten, z. B. Massivholzplatten, Sperrholzplatten, Span- oder Faserplatten, die eine Unebenheit in der Oberfläche aufweisen. In der Oberfläche der Furnierplatte 1 befindet sich eine Unebenheit 4, die sich in der Tiefe T bis unterhalb der Ebene E erstreckt, in der sich die Oberfläche der Furnierplatte befindet. Die Unebenheit 4 weist eine Erstreckung in die Länge L, die Breite B und die Tiefe T der Furnierplatte 1 auf, wobei die Länge L und die Breite B in der Ebene E liegen. Die Unebenheit 4 weist eine Füllung 5 mit einem in Schichten 5a-5d eingetragenen Füllmaterial auf. Die Oberseite 6 des Füllmaterials bzw. der Füllung 5 liegt hier in der Ebene E, die Füllung 5 füllt also die gesamte Unebenheit 4 mit Füllmaterial aus, das in Schichten eingetragen wurde. Die Oberseite 6 der Füllung 5 kann jedoch auch unter- oder oberhalb der Ebene E liegen.

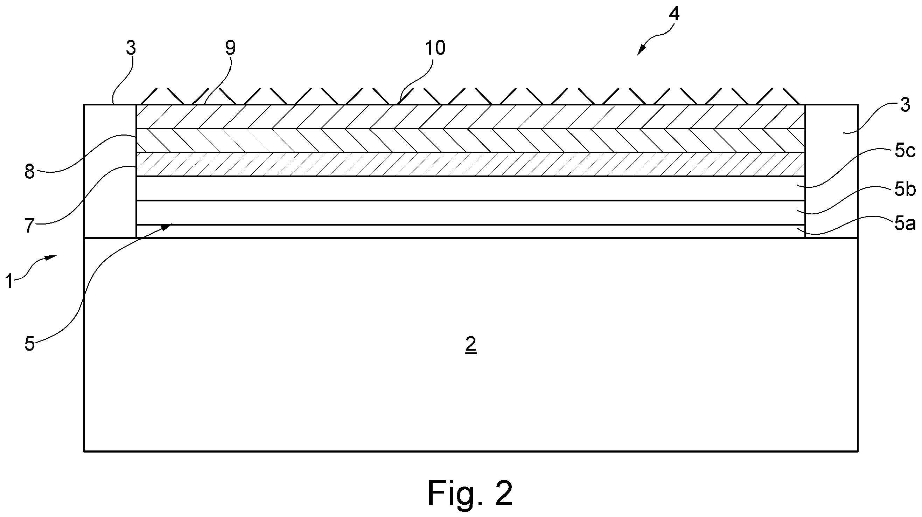

Fig. 2 zeigt eine Furnierplatte 1 mit einer Unebenheit 4 im Furnier 3, die mit einer Füllung 5 verfüllt ist. Die Füllung 5 weist drei Schichten auf, wobei die unterste Schicht 5a auf der Trägerplatte aufliegt, darauf sind die Schichten 5b und 5c aufgetragen. Die Schichten 5a bis 5c füllen die Länge und die Breite der Unebenheit 4 aus. Sie füllen die Unebenheit 4 jedoch nicht bis zur Ebene E aus. Auf der Schicht 5c aus Füllmaterial ist eine Grundierung 7 aufgetragen, die aus Füllmaterial besteht, das im Farbton der die Unebenheit 4 umgebenden Oberfläche des Furniers 3 eingefärbt ist. Auf die Grundierung 7 ist eine Dekorschicht 8 aufgetragen, aus einem Material, das einen zur Grundierung 7 kontrastierenden Farbton aufweist, und das nur abschnittsweise auf die Grundierung 7 aufgetragen ist. Auf die Dekorschicht 8 ist eine Versiegelung 9 aus einem transparenten Versiegelungsmaterial aufgetragen, das mit Korundpartikeln versetzt ist, um eine gute Abriebfestigkeit zu gewährleisten. Auf die Versiegelung 9 ist eine Struktur aufgetragen, die, obwohl erhaben aufgetragen, die Porenstruktur des Furniers 3 nachahmen soll. Die Füllung 5, die hier zusätzlich die Schichten 7, 8, und 9 aufweist, füllt die Unebenheit 4 bis zur Ebene E aus. Die Struktur 10 ragt um wenige µm über die Ebene E hinaus.

### Ausführungsbeispiel 1:

Eine HDF-Platte 2 (Format: 2800 x 2070 x 8 mm) wird in einer Kurztakt-Presse beidseitig mit einem Furnier 3 (0,5 mm, Eichenfurnier oben, Buchenfurnier unten) beschichtet. Dabei wird die Verklebung mit einem mit Melamin beharzten Overlay durchgeführt. Das Overlay hatte ein Papiergewicht von 25 g/m² und ein Endgewicht mit Melaminharz von 150 g/m² ( VC-Wert: ca. 6,0 % ). Die Presszeit lag bei 45 sec., die Presstemperatur bei 180°C und der Pressdruck bei 40 bar. Zum Abdecken der gesamten Oberseite der Furnierplatte 1 wurden Eichen-Furniere 3 verwendet, die pro Quadratmeter ca. fünf Fehlstellen aufwiesen. Im Anschluss an das Aufbringen der Furniere 3 wird die Furnierplatte 1 im Durchlauf an einem Scanner mit mehreren Messköpfen vorbeigeführt und dabei gescannt. Dabei werden alle Unebenheiten erfasst, die tiefer als 0,1 mm, breiter als 1,5 mm und länger als 4 mm sind. Alle Unebenheiten werden als Datensatz mittels einer Software gespeichert. Der Datensatz ist der Furnierplatte 1 fest zugeordnet und kann in allen weiteren Be- und Verarbeitungsschritten wieder abgerufen werden. Vorteilhaft ist an der Furnierplatte 1 mindestens eine Markierung angebracht, die als Bezugspunkt für das Ausrichten von Werkzeugen wie z. B. einem Matrixdrucker oder einem Sprühkopf dient.

Anschließend wird die Furnierplatte 1 weiter zu einer Sprühvorrichtung gefördert und dort wird mit einem Sprühkopf ein flüssiger Primer in die Unebenheiten eingebracht (Auftragsmenge: 10g - 15 g Primer /m²). Danach wird die Furnierplatten 1 zu einem Matrixdrucker, hier einem 3D-Drucker gefördert. Der 3-D-Drucker verfüllt die Vertiefungen lagenweise mit Füllmaterial 5. Jede Lage 5a-5d hat eine Dicke von 0,1 mm. Der 3-D-Drucker wird während des Verfüllens von der Steuereinheit gesteuert, die zum einen bewirkt, dass der 3-D-Drucker exakt über der Unebenheit ausgerichtet ist, und die zum anderen gewährleistet, dass der Drucker exakt Tiefe, Breite und Länge der Unebenheit bis zur Ebene E, also der Oberfläche des Furniers 3, verfüllt. Als Füllmaterial kommt ein schwarz ein-gefärbtes Polyamid 12 zur Anwendung, was einen möglichst großen farblichen Kontrast zur Oberfläche des die Unebenheit umgebenden Eichenfurniers zeigt. Zum 3-D-Drucker gehören Mittel zum Schmelzen und zum Kühlen des Polyamids, so dass jede Schicht 5a-5d fest in der Unebenheit verankert ist. Das Verfüllen mittels 3-D-Drucker erzeugt eine Füllung 5 mit einer ebenen Oberfläche, die in der Ebene E, d. h., der Oberfläche des Furniers fluchtet. Die Füllung schließt fugenlos in Länge und Breite an die umgebende Oberfläche an. Die Füllung fluchtet in der Ebene E so mit der Oberfläche des Furniers 3, dass die Furnierplatte 1 unmittelbar nach dem Verfüllen weiter be- und verarbeitet werden kann, insbesondere beschichtet bzw. versiegelt werden kann, ohne dass ein Schleifen der Furnierplatte 1 mit den verfüllten Unebenheiten 5 erforderlich ist.

Nach dem Verfüllen aller Unebenheiten wird also die Furnierplatte 1 mit dem Furnier 3 aus Eiche samt verfüllten Unebenheiten unmittelbar lackiert, was den Einsatz als Bodenbelag ermöglicht. Aus der großformatigen Furnierplatte 1 werden in einer Fußbodenstraße einzelne Dielen erzeugt, die mit einem rundumlaufenden Profil versehen werden, das eine leimlose Verlegung zulässt. Falls gewünscht kann die Steuereinheit mit den darin gespeicherten Daten der Unebenheiten Einfluss auf die Aufteilung der Furnierplatte 1 nehmen, um eine optimale Verteilung der verfüllten Unebenheiten zu gewährleisten.

### Ausführungsbeispiel 2:

Eine Spanplatte 2 (Format: 2800 x 2070 x 18 mm) wird in einer Kurztakt-Presse beidseitig mit einem Furnier 3 (0,5 mm, Kirschbaumfurnier oben und unten) beschichtet. Dabei wird die Verklebung mit einem mit Melamin getränktem bzw. beschichtetem Overlay durchgeführt. Das Overlay hatte ein Papiergewicht von 25 g/m² und ein Endgewicht mit Melaminharz von 150 g/m² (VC-Wert: ca. 6,0 %). Die Presszeit lag bei 45 sec., die Presstemperatur bei 180°C und der Pressdruck bei 40 bar. Es wurden beidseitig Furniere 3 verwendet, die pro Quadratmeter ca. 1-3 Unebenheiten 5 besaßen. Bei den Unebenheiten 5 handelte es insbesondere um Risse, die beim Zusammenfügen der Furniere 3 aus einzelnen Streifen entstanden waren bzw. die nachträglich bei der Manipulation der zusammengesetzten Furniere 3 auf der großformatigen Spanplatte 2 entstanden waren.

Im Anschluss an das Aufbringen der Furniere wird die Furnierplatte 1 wie zum Ausführungsbeispiel 1 beschrieben, im Durchlauf von einem Scanner mit mehreren Messköpfen gescannt. Dabei werden alle Unebenheiten 5 erfasst und mittels der Software in der Steuereinheit gespeichert. Anschließend wird mit einem Sprühkopf ein flüssiger Primer in die Fehlstellen eingebracht (Auftragsmenge: 10 - 15 g Primer/m²). Danach werden mit einem 3D-Drucker die Vertiefungen lagenweise verfüllt. Als Füllmaterial kam ein eingefärbtes TPU (thermoplastisches Polyurethan) zur Anwendung. Dies Füllmaterial war farblich an das Eichenfurnierangepasst, um die Reparatur-/Füllstellen möglichst wenig farblichen Kontrast zur Eichenfurnier-Oberfläche zeigen sollte. Nach der Reparatur der verschiedenen Fehlstellen wurde das Eichenfurnier mit einem Lacksystem lackiert, das den Einsatz als Front ermöglichte. Aus dem Großformat wurden in einer Maschinenstraße Fixmaße für Frontelemente erzeugt.

### Ausführungsbeispiel 3

Die Oberfläche der gemäß Ausführungsbeispiel 1 hergestellten Furnierplatte 1 wird von einem Scanner abgetastet und es wird ein Datensatz in der Steuereinheit abgelegt, der alle Unebenheiten 4 einer Furnieroberfläche der Furnierplatte 1 enthält, gespeichert.

Zum Verfüllen einer Unebenheit mit einer Tiefe von 0,5 mm steuert die Steuereinheit einen ersten 3-D-Drucker, der eine erste Schicht 5a, eine zweite Schicht 5b und eine dritte Schicht 5c eines Füllmaterials einbringt. Jede Schicht 5a bis 5c weist eine Dicke von 0,1 mm auf. Die Steuereinheit steuert anschließend einen zweiten 3-D-Drucker, der eine 0,1 mm dicke Schicht eines Deckmaterials einbringt, das so eingefärbt ist, dass es der umgebenden Furnieroberfläche entspricht. Die Steuereinheit steuert anschließend das abschnittsweise Aufbringen eines Farbdekors mittels eines Tintenstrahldruckers in einer oder mehreren Farben, die sich vom Deckmaterial unterscheiden. Die Oberfläche der verfüllten Unebenheit wird dadurch der umgebenden Furnieroberfläche weitgehend angeglichen.

Auf das Farbdekor wird mittels eines weiteren Tintenstrahldruckers eine Versiegelung aus einem UV-härtenden Lack in einer Dicke von 0,1 mm aufgetragen. Die Unebenheit ist nun so weit verfüllt, dass die Oberfläche der verfüllten Unebenheit in der Ebene E der Oberseite des Furniers liegt. Das Verfüllen erfolgt maschinell und gesteuert durch die Steuereinheit. Händische Arbeit und das Schleifen der Füllung 5 entfallen.

Bei den vorstehenden Ausführungsbeispielen wird als Primer eine Verbindung auf Basis von Isocyanaten eingesetzt.

Als Füllmaterial wird in den vorstehenden Ausführungsbeispielen jeweils ein Material aus der Gruppe eingesetzt, die Polyamid, TPU (thermoplastisches Polyurethan), PLA (Polymilchsäure), ABS (Acrylnitril-Butadien-Styrol-Copolymer), PVAc (Polyvinylacetat), PETG (mit Glycol polymerisiertes Polyethylenterephthalat), HIPS (High-impact Polystyrene), Holzfilament, Acrylat-, Epoxy- oder Vinylester-Verbindungen, insbesondere deren Monomere oder Oligomere usw. umfasst. Wird eine Acrylat-, Epoxy- oder Vinylester-Verbindung eingesetzt, dann weist der Matrixdrucker bevorzugt auch Mittel zum Trocknen oder Aushärten auf. Werden thermoplastische Verbindungen eingesetzt, die bei hohen Temperaturen verarbeitet werden, die sich aber bei geringeren Temperaturen verfestigen, dann weist der Matrixdrucker bevorzugt Mittel zum Kühlen auf.

In gleicher Weise kann an Stelle einer Furnierplatte 1 auch eine Holzwerkstoffplatte bearbeitet werden, indem Unebenheiten gescannt, ggf. bearbeitet und anschließend wie vorstehend in den Ausführungsbeispielen 1 bis 3 beschrieben verfüllt werden. Da Holzwerkstoffplatten oft auf ihrer gesamten Oberfläche (Oberseite und/oder Unterseite) noch mit einer Oberflächenbeschichtung versehen werden, genügt es meist, Füllmaterial in eine Unebenheit einzubringen. Der Vorteil liegt hier darin, dass das eingebrachte Füllmaterial vor dem Aufbringen einer nicht geschliffen werden muss, weil die ebene Oberfläche der Füllung mit der Ebene E der Oberfläche der Holzwerkstoffplatte fluchtet.

## Patentansprüche

1. Verfahren zum Verfüllen einer Unebenheit (4) in der Oberfläche einer Furnier- oder Holzwerkstoffplatte (1) mit den Schritten:
- Erfassen der Unebenheit (4) in der Oberfläche der Furnier- oder Holz werkstoffplatte (1), und
- Eintragen von Material in die Unebenheit (4), die hinter die Oberfläche zurücktritt, wobei das Eintragen von Material mittels eines 3D-Druckers derart erfolgt, dass eine ebene Oberfläche der Furnier- oder Holzwerkstoffplatte geschaffen wird.

2. Verfahren nach Anspruch 1, wobei das Eintragen von Material schichtweise mit einer ersten und mindestens einer zweiten Schicht (5a, 5b, 5c, 5d) erfolgt.

3. Verfahren nach Anspruch 1 oder 2, wobei das Eintragen von Material in eine Schicht (5a, 5b, 5c, 5d) abschnittsweise erfolgt.

4. Verfahren nach einem der vorstehenden Ansprüche, wobei eine Schicht (5a, 5b, 5c, 5d) eine Dicke von 0,001 mm bis 1 mm aufweist.

5. Verfahren nach einem der vorstehenden Ansprüche, wobei ein erstes Material und mindestens ein zweites Material, das sich von dem ersten Material unterscheidet, in die Unebenheit (4) eingetragen wird, die hinter die Oberfläche der Furnier- oder Holzwerkstoffplatte (1) zurücktritt.

6. Verfahren nach einem der vorstehenden Ansprüche, wobei zwei oder mehr 3D-Drucker zum Eintragen von Material in eine Unebenheit (4) eingesetzt werden.

7. Verfahren nach einem der vorstehenden Ansprüche, wobei als Material jeweils mindestens eine Beize, ein Primer, ein Füllmaterial, eine Grundierung, ein Dekormaterial, ein Versiegelungsmaterial, ein strukturbildendes Material, ein Öl und ein Lack eingesetzt werden, die jeweils einzeln oder in Kombination in einer ersten und mindestens in einer zweiten Schicht (5a, 5b, 5c, 5d) eingetragen werden.

8. Verfahren nach einem der vorstehenden Ansprüche, wobei der 3D-Drucker zum Aufbringen einer Struktur (10) eingesetzt wird.

9. Verfahren nach einem der vorstehenden Ansprüche, wobei Mittel zum Angleichen der die Unebenheit (4) umgebenden Holzoberfläche, Mittel zum Einbringen eines Primers und/oder Mittel zum Aushärten des in die Unebenheit (4) eingetragenen Materials eingesetzt werden.

10. Verfahren nach einem der vorstehenden Ansprüche, wobei das Erfassen der Oberfläche erfolgt, indem die Oberfläche der Furnier- oder Holzwerkstoffplatte (1) gescannt wird, wobei mindestens eine Unebenheit (4) nach Tiefe, Länge und Breite bezogen auf die Ebene (E) erfasst und als Datensatz gespeichert wird.

11. Verfahren nach Anspruch 10, **dadurch gekennzeichnet, dass** der Datensatz von einer Steuereinheit genutzt wird, um mindestens einen 3D-Drucker zum Verfüllen einer Unebenheit (4) zu steuern.

12. Furnier- oder Holzwerkstoffplatte (1), aufweisend eine Unebenheit (4), die mit einem Material verfüllt ist, wobei das Material mittels eines 3D-Druckers schichtweise eingetragen ist.

13. Furnier- oder Holzwerkstoffplatte (1) nach Anspruch 12, **dadurch gekennzeichnet, dass** ein erstes Material und mindestens ein zweites Material in die Unebenheit (4) eingetragen sind.

14. Furnier- oder Holzwerkstoffplatte (1) nach Anspruch 12 oder 13, **dadurch gekennzeichnet, dass** die Unebenheit (4) im Bereich der Oberfläche der Furnier- oder Holzwerkstoffplatte (1) eine Struktur (10) aufweist.

## Claims

1. Method for backfilling an unevenness (4) in the surface of a veneer or wood-based board (1), comprising the steps:
- detecting the unevenness (4) in the surface of the veneer or wood-based board (1), and
- material input into the unevenness (4) that recedes behind the surface, wherein the material input is carried out using a 3D printer in such a way that a flat surface of the veneer or wood-based board is created.

2. Method according to claim 1, wherein the material input is carried out in layers with a first and at least a second layer (5a, 5b, 5c, 5d).

3. Method according to claim 1 or 2, wherein material input into a layer (5a, 5b, 5c, 5d) is carried out in sections.

4. Method according to one of the preceding claims, wherein a layer (5a, 5b, 5c, 5d) has a thickness of 0.001 mm to 1 mm.

5. Method according to one of the preceding claims, wherein a first material and at least one second material, which differs from the first material, are deposited in the unevenness (4) that recedes behind the surface of the veneer or wood-based board (1).

6. Method according to one of the preceding claims, wherein two or more 3D printers are used for material input into an unevenness (4).

7. Method according to one of the preceding claims, wherein at least one stain, primer, filling material, base coat, decorative material, sealing material, structure-forming material, oil and lacquer are used as materials, which are inserted individually or in combination in a first and at least a second layer (5a, 5b, 5c, 5d).

8. Method according to one of the preceding claims, wherein the 3D printer is used to apply a structure (10).

9. Method according to one of the preceding claims, wherein means for matching the wood surface surrounding the unevenness (4), means for inserting a primer, and/or means for curing the material inserted into the unevenness (4) are used.

10. Method according to one of the preceding claims, wherein the surface is detected by scanning the surface of the veneer or wood-based board (1), wherein at least one unevenness (4) is detected in terms of depth, length, and width relative to the plane (E) and stored as a set of data.

11. Method according to claim 10, **characterized in that** the set of data is used by a control unit to control at least one 3D printer for backfilling an unevenness (4).

12. Veneer or wood-based board (1) having an unevenness (4) that is backfilled with a material, wherein the material input is carried out in layers using a 3D printer.

13. Veneer or wood-based board (1) according to claim 12, **characterized in that** a first material and at least one second material are inserted to the unevenness (4).

14. Veneer or wood-based board (1) according to claim 12 or 13, **characterized in that** the unevenness (4) has a structure (10) in the area of the surface of the veneer or wood-based board (1).

## Revendications

1. Procédé de remplissage d'une irrégularité (4) dans la surface d'un panneau de placage ou de bois (1) comprenant les étapes suivantes :
- détection de l'irrégularité (4) dans la surface du panneau de placage ou de bois (1), et
- introduction de matériau dans l'irrégularité (4) qui est en retrait par rapport à la surface, l'introduction de matériau étant effectuée au moyen d'une imprimante 3D de telle sorte qu'une surface plane du panneau de placage ou de matériau à base de bois soit créée.

2. Procédé selon la revendication 1, dans lequel le dépôt de matériau est effectué par couches avec une première et au moins une deuxième couche (5a, 5b, 5c, 5d).

3. Procédé selon la revendication 1 ou 2, dans lequel le dépôt de matériau dans une couche (5a, 5b, 5c, 5d) est effectué par sections.

4. Procédé selon l'une quelconque des revendications précédentes, dans lequel une couche (5a, 5b, 5c, 5d) a une épaisseur de 0,001 mm à 1 mm.

5. Procédé selon l'une quelconque des revendications précédentes, dans lequel un premier matériau et au moins un deuxième matériau, différent du premier matériau, sont introduits dans l'irrégularité (4) qui est en retrait par rapport à la surface du panneau de placage ou de bois (1).

6. Procédé selon l'une quelconque des revendications précédentes, dans lequel deux ou plusieurs imprimantes 3D sont utilisées pour déposer le matériau dans une aspérité (4).

7. Procédé selon l'une des revendications précédentes, dans lequel on utilise comme matériau respectivement au moins une teinture, un apprêt, un matériau de remplissage, une couche de base, un matériau décoratif, un matériau de scellement, un matériau structurant, une huile et un vernis, qui sont respectivement introduits individuellement ou en combinaison dans une première couche et au moins dans une deuxième couche (5a, 5b, 5c, 5d).

8. Procédé selon l'une quelconque des revendications précédentes, dans lequel l'imprimante 3D est utilisée pour appliquer une structure (10).

9. Procédé selon l'une quelconque des revendications précédentes, dans lequel on utilise des moyens pour égaliser la surface du bois entourant l'aspérité (4), des moyens pour introduire un primaire et/ou des moyens pour durcir le matériau introduit dans l'aspérité (4).

10. Procédé selon l'une des revendications précédentes, dans lequel la saisie de la surface s'effectue en scannant la surface du panneau de placage ou de bois (1), au moins une irrégularité (4) étant saisie en profondeur, en longueur et en largeur par rapport au plan (E) et étant enregistrée sous forme de jeu de données.

11. Procédé selon la revendication 10, **caractérisé en ce que** l'ensemble de données est utilisé par une unité de commande pour commander au moins une imprimante 3D pour remplir une irrégularité (4).

12. Panneau de placage ou de bois (1), présentant une irrégularité (4) qui est remplie d'un matériau, le matériau étant déposé par couches au moyen d'une imprimante 3D.

13. Panneau de placage ou de bois (1) selon la revendication 12, **caractérisé en ce qu'**un premier matériau et au moins un deuxième matériau sont inscrits dans l'-aspérité (4).

14. Panneau de placage ou de matériau dérivé du bois (1) selon la revendication 12 ou 13, **caractérisé en ce que** l'irrégularité (4) présente une structure (10) dans la zone de la surface du panneau de placage ou de matériau dérivé du bois (1).
